# EUROPEAN PATENT SPECIFICATION

(11) **EP 3 666 498 B1**
(45) Date of publication and mention of the grant of the patent: **23.11.2022**
(21) Application number: 18919404.6
(22) Date of filing: 11.10.2018
(51) Int. Cl.: B29C 49/66, B29C 49/12, B29C 49/06, B29C 49/78, B29C 49/42, B29K 67/00, B29L 31/00, B29C 49/54, B29C 49/48

(54) **STRETCH BLOW MOLDING DEVICE AND BLOW MOLDING METHOD**
STRECKBLASMASCHINE UND BLASFORMVERFAHREN
DISPOSITIF DE MOULAGE PAR SOUFFLAGE AVEC ÉTIRAGE ET PROCÉDÉ DE MOULAGE PAR SOUFFLAGE

(43) Date of publication of application: 17.06.2020
(73) Proprietor: AOKI TECHNICAL LABORATORY, INC., Hanishina-gun, Nagano 389-0603 (JP)
(72) Inventor: NAKAZAWA, Nobuhiko, Nagano 3890603 (JP)
(74) Representative: Casalonga
(86) International application number: PCT/JP2018/037932
(87) International publication number: WO 2020/075267

(56) References cited:
- JP-A- H0 272 929
- JP-A- H0 272 929
- JP-A- H05 237 923
- JP-A- 2004 050 665
- JP-A- 2012 006 198
- US-A- 4 070 141
- US-A- 5 085 822
- US-A1- 2003 098 526

## Description

### Field

The present invention relates to a stretch blow molding method for molding a hollow molded body from a preform and to a stretch blow molding apparatus adapted to perform this method.

In particular, the present invention relates to a method according to the preamble of claim 1, such as it is e.g known from JP H02 72929 A, JP H05 237923 A, US 5 085 822 A, US 2003/098526 A and US 4 070 141 A.

### Background

Conventionally, apparatuses for molding a hollow molded body by blowing air adopting a direct blow molding method disclosed in Patent Literature 1 have been known. In this method, after a cylindrical molten resin called a parison, which has been extruded from an extruder, is sandwiched by halves of a blow mold, and a blow pin is brought into contact with a portion to be an opening portion in the molded body. Compressed air for cooling is blown into the cylindrical molten resin from the blow pin, whereby the molten resin inflated by the blowing is cooled by bringing it into contact with a hollow molded body-forming surface on the inner surface of the blow mold. After cooling, the compressed air for cooling is discharged from the hollow formed body.

The teaching of JPH0272929A corresponds to the preambles of claims 1 and 2.

Patent Literature 1 discloses a technique in which, when the compressed air for cooling inside the hollow molded body is discharged from the tip of the blow pin after cooling by blowing the compressed air for cooling, the blow pin is slightly raised from the blow mold to form a gap between the blow pin and the inner surface of the opening portion of the hollow molded body formed within the mold, so that the compressed air for cooling, which is in a high pressure state in the hollow molded body, escapes.

Patent Literature 2 discloses a blow molding method using the same direct blow molding system, in which compressed air is blown and discharged simultaneously after the hollow molded body is molded. In this technique, the internal gas pressure in the hollow molded body is set to a predetermined pressure and the flow rate is made constant so that compressed air is discharged while being blown.

In this technique of Patent Literature 2, after the cylindrical molten resin, which has been extruded from the extruder, is sandwiched by the blow mold in the same manner as described above, the blow pin is brought into contact with the nozzle portion of the metal mold. When a solenoid valve is opened, the compressed air is supplied into the parison, so that the parison is inflated and pressed against the mold surface of the metal mold to mold the hollow molded body. When the internal pressure in the hollow molded body, after the hollow molded body has been molded, reaches a set value of a relief valve, the compressed air blown into the hollow molded body is discharged to the outside of the mold.

Similarly, in direct blow molding, it is disclosed in Patent Literature 3 that hot air in the hollow molded body is discharged to the outside of the hollow molded body while the pressure in the hollow molded body by blowing air or the like is maintained at a predetermined pressure.

Patent Literature 3 discloses that mold halves in which a parison has been arranged are closed; air is blown into the parison from a blow-out port of a blow-in nozzle portion arranged at the center of an air blow-in and discharge nozzle, thereby forming a hollow molded body in which a substantially columnar shape is stabilized; when the pressure inside the hollow molded body reaches a predetermined pressure, the air inside the hollow molded body is discharged from the discharge nozzle portion arranged around the blow-in nozzle portion of the air blow-in and discharge nozzle, and the hollow molded body is inflated by the blow-in air from the blow-in nozzle portion; and the air having achieved the inflation is discharged from the discharge nozzle portion together with heat to the outside of the hollow molded body to prevent stagnation of heat and promote cooling.

In the stretch blow molding, which is different from the direct blow molding, a preform which can be shaped at a high temperature is disposed in a blow mold which is a split mold, a rod is caused to enter the preform from a side which becomes a mouth portion of the preform to stretch the preform in the rod axial direction, and compressed air is blown into the interior of the preform to bring the preform into contact with an inner surface of the blow mold, thereby molding the hollow molded body.

When the preform is stretched and molded into a hollow molded body by blowing compressed air therein, for example, as disclosed in Patent Literature 4, a passage through which the compressed air passes is provided in a blow core in which the rod is movably disposed, and the compressed air is blown into the preform through the passage to inflate the preform and, after the preform becomes the shape of the hollow molded body, discharging air is performed through the passage.

### Citation List

### Patent Literature

Patent Literature 1: Japanese Patent Application Laid-Open No. Hei. 10-006391
Patent Literature 2: Japanese Patent Application Laid-Open No. Hei. 09-131784
Patent Literature 3: Japanese Patent Application Laid-Open No. Hei. 03-013313
Patent Literature 4: Japanese Patent Application Laid-Open No. Hei. 05-237923

### Summary

The invention is defined by the features of independent claims 1 and 2.

### Technical Problem

### Injection stretch blow molding machine:

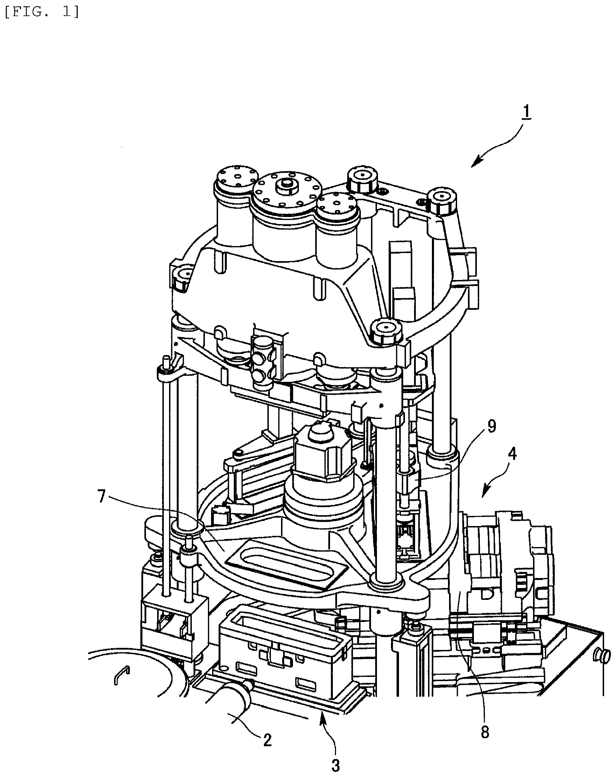

There has been known an injection stretch blow molding machine as an apparatus for manufacturing a hollow molded body by using the above-described stretch blow molding method. FIG. 1 shows an injection stretch blow molding machine 1. This injection stretch blow molding machine 1 includes an injection molding section 3 to which an injection machine 2 is connected and into which a molten resin is supplied to mold a preform, a stretch blow molding section 4 configured to mold the preform, which has been molded by the injection molding section 3 and is in a state of being shapable at a high temperature, into a hollow molded body, and an ejection section 5 configured to transfer the hollow molded body, having been molded by the stretch blow molding section 4, to the outside of the injection stretch blow molding machine 1.

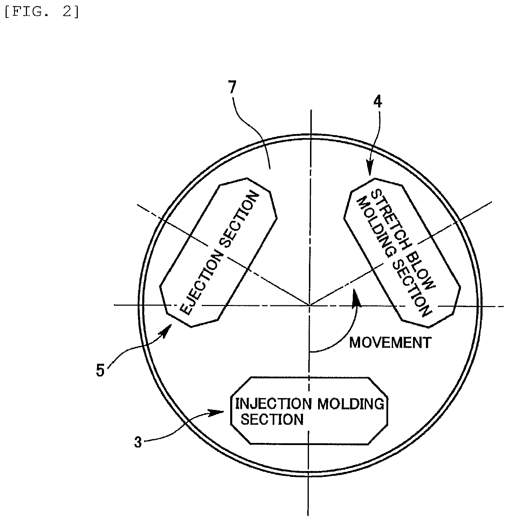

In the injection stretch blow molding machine 1 described above, the injection molding section 3, the stretch blow molding section 4, and the ejection section 5 are disposed in order along the direction around the center of the injection stretch blow molding machine 1 so that lip molds 6 described later can swirl and move to convey a plurality of preforms as a set, which has been molded by the injection molding section 3, to the stretch blow molding section 4, and further convey a plurality of hollow molded bodies as a set, which has been blow molded by the stretch blow molding section 4, to the ejection section 5. See FIG. 2.

The lip molds 6 for forming the outer peripheral surface of a preform mouth portion and conveying the preform are provided so as to move to the injection molding section 3, the stretch blow molding section 4, and the ejection section 5 in order. Here, a rotating plate 7 having the lip molds 6 on its lower surface stops and is capable of descending and ascending at every rotation of a fixed rotation angle, and the lip molds 6 correspond to the injection molding section 3, the stretch blow molding section 4, and the ejection section 5 each time the rotating plate 7 descends. The hollow molded bodies are manufactured by performing as one cycle: supporting and conveying the preforms having been molded in the injection molding section 3 by the lip molds 6 to the stretch blow molding section 4; supporting and conveying the hollow molded bodies having been molded in the stretch blow molding section 4 by the lip molds 6 to the ejection section 5; and conveying the hollow molded bodies to the outside of the molding machine from the ejection section 5. The arrangement of the injection molding section 3, the stretch blow molding section 4, and the ejection section 5 is designed so that the sections are located at every 120° in the moving direction of the lip molds 6.

### Stretch blow molding apparatus:

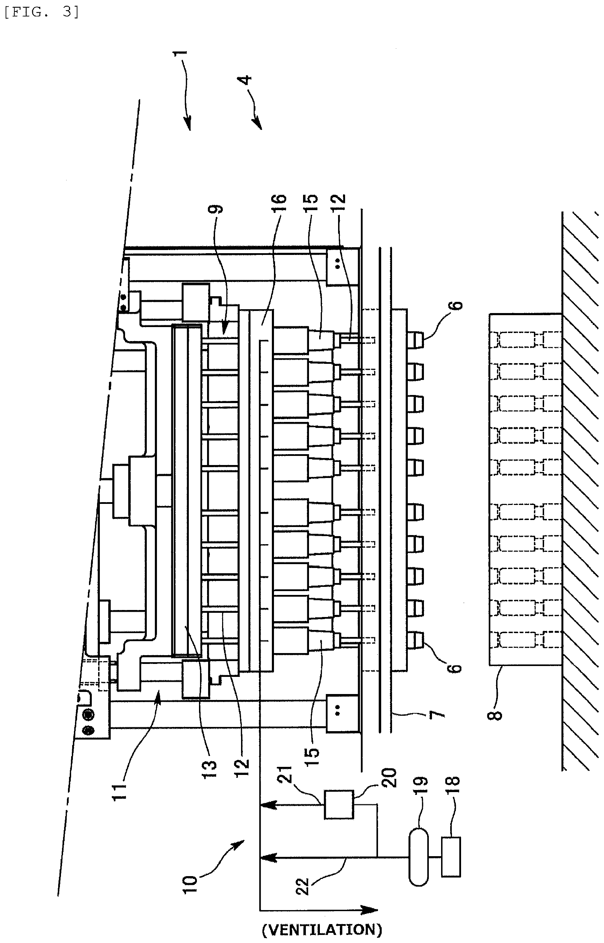

As illustrated in FIG. 3, a stretch blow molding apparatus 11 including a blow mold 8, a stretching apparatus 9, and a blowing apparatus 10 is configured in the above-described stretch blow molding section 4. The blow mold 8 in the stretch blow molding apparatus 11 is a split mold. A preform which can be shaped at high temperature can be disposed in a state where it is supported by the lip molds 6, and the blow mold 8 has a hollow molded body shape-forming surface on the inner surface thereof.

### Stretching apparatus:

The above-described stretching apparatus 9 in the stretch blow molding apparatus 11 is provided with a rod 12 which passes through the lip mold 6 having been superposed on the upper part of the blow mold 8 and enters the mold interior of the blow mold 8 while being able to ascend and descend. The rod 12 is supported by a rod mounting body 13. The descent of the rod mounting body 13 causes the rod 12 to descend through the central portion of the lip mold 6 and enter the interior of the preform supported by the lip mold 6 and disposed in the blow mold 8. The preform is then stretched in the rod axial direction by moving the rod 12 downward (downward in the rod axial direction).

### Blowing apparatus:

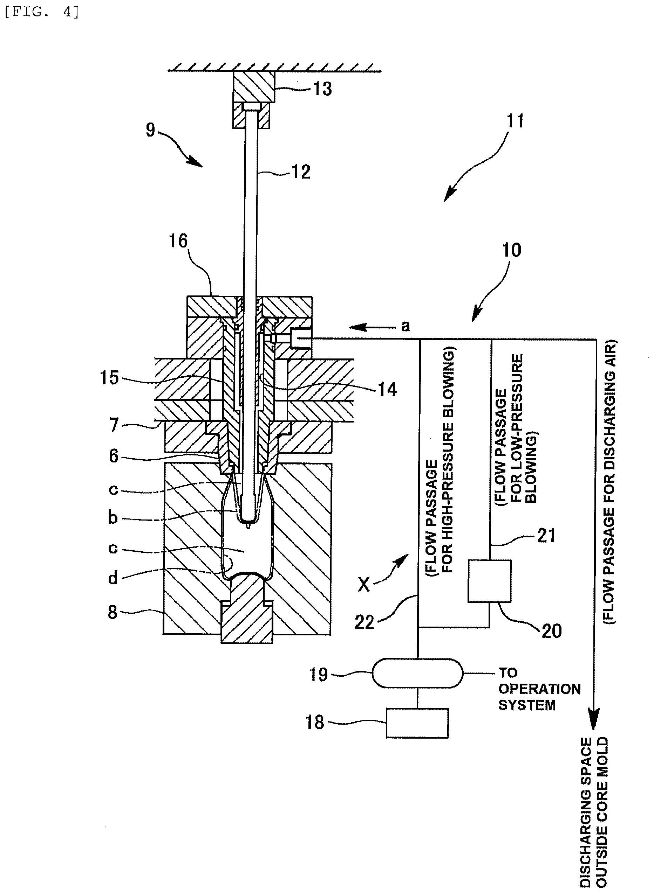

In the blowing apparatus 10 of the stretch blow molding apparatus 11, as illustrated in FIG. 4, a cylindrical blow core 15 is supported by a blow core mounting body 16. The blow core 15 has an in-core passage 14 through which compressed air a flows and through which the above-described rod 12 is allowed to pass. The blow core 15 is provided in a state in which the blow core 15 can ascend or descend by raising and lowering the blow core mounting body 16.

The blow core 15 is caused to descend, so that the lower portion of the blow core 15 is fit to the inside of the above-described lip mold 6. This brings the portion of the in-core passage 14 of the blow core 15 into communication with the internal space c of the preform b in the blow mold 8. Compressed air a is blown through the in-core passage 14 into the interior of the preform b that is being stretched by the descending rod 12 in the in-core passage 14. This can achieve the blowing operation in which the compressed air a inflates the preform b into the hollow molded body d.

As described above, the stretch blow molding apparatus 11 includes the blow mold 8, the stretching apparatus 9, and the blowing apparatus 10. The preform b that has been stretched by the stretching apparatus 9 in the blow mold 8 is inflated so as to be brought into contact with the hollow molded body shape-forming surface of the blow mold 8, thereby shaping the preform b into the shape of the hollow molded body d. Then, the temperature of the hollow molded body d itself is lowered by bringing the hollow molded body d into contact with the blow mold 8, so that the hollow molded body d having a stable shape is formed.

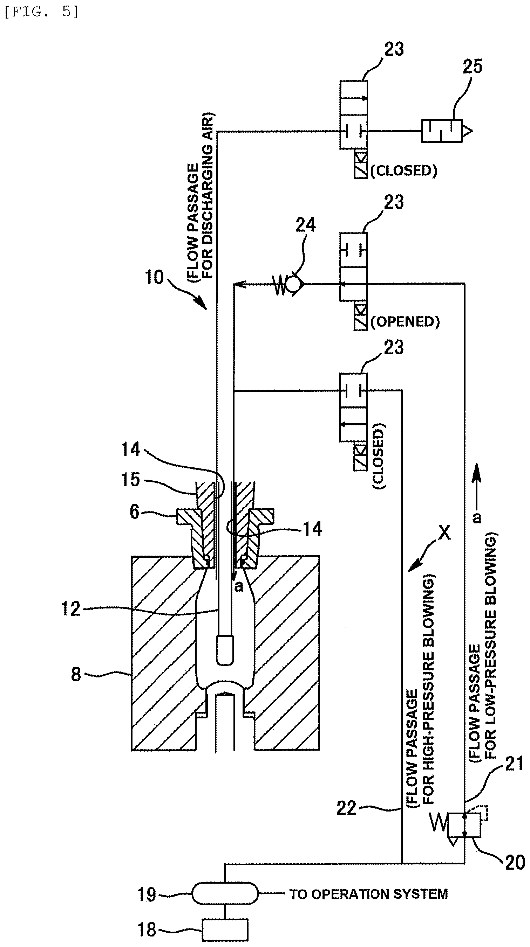

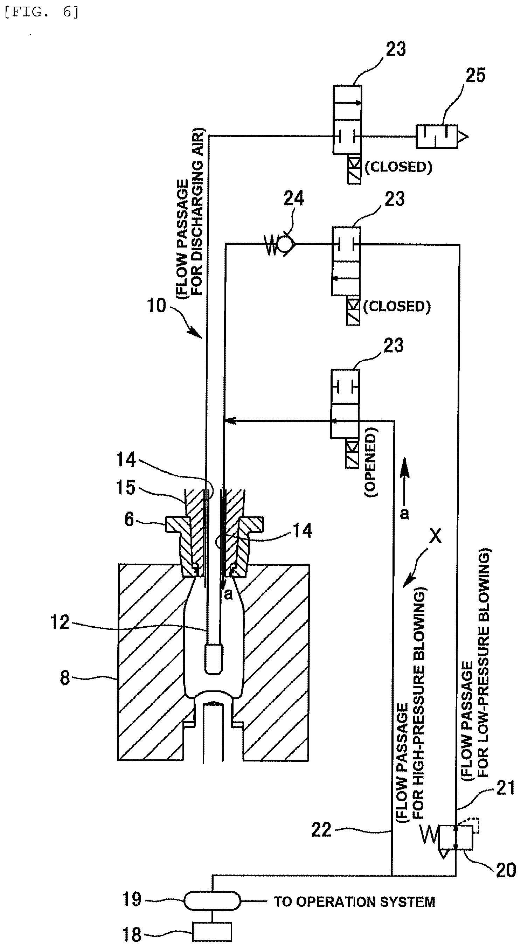

In the above-described blowing apparatus 10, as illustrated in FIGS. 5 and 6, compressed air is stored in an air tank 19 from a compression machine 18 such as a compressor. A first compressed air supply source 21 is connected to the air tank 19 so that compressed air having been adjusted to have a low pressure by a pressure reducing valve 20 is taken out. The apparatus with such a configuration is configured such that a flow passage for low-pressure blowing to inflate the preform with the compressed air having been adjusted to have a low pressure by blowing the compressed air having the low pressure into the preform through the in-core passage 14 can be formed.

The blowing apparatus 10 is configured such that a flow passage for blowing high-pressure compressed air is formed after shaping has been performed by the above-described low-pressure compressed air. The blowing apparatus 10 is also connected to a second compressed air supply source 22 from which high-pressure air can be taken out from the air tank 19 described above. In order to bring the shaped hollow molded body into close contact with the blow mold and to make the cooling action from the blow mold side more effective, the blowing apparatus 10 is configured such that a flow passage for high-pressure blowing is formed which blows high-pressure compressed air into the preform through the in-core passage 14.

The blowing apparatus 10 is configured such that, after the high-pressure compressed air has been blown through the flow passage for high-pressure blowing to cool the hollow molded body, a flow passage for discharging the compressed air from the hollow molded body to the outside of the core mold through the in-core passage 14 can be formed.

In the blowing apparatus 10 illustrated in FIGS. 5 and 6, a solenoid valve 23 for opening and closing the flow passage is installed to each of the above-described flow passages. The solenoid valve 23 is used for switching the flow of the compressed air between the time of blowing the low-pressure compressed air into the preform and the time of blowing the high-pressure compressed air into the hollow molded body after the shaping, and for allowing the compressed air to be discharged to the outside of the core mold when necessary. A check valve 24 is attached to a portion of the flow passage for blowing low-pressure compressed air into the preform, and a silencer 25 is attached to an end portion of the flow passage for discharging air.

FIG. 5 illustrates a state in which low-pressure compressed air is blown, where the solenoid valve 23 of the flow passage for low-pressure blowing is opened, the solenoid valve 23 of the flow passage for high-pressure blowing is closed, and the solenoid valve 23 of the flow passage for discharging air is closed. FIG. 6 illustrates a state in which high-pressure compressed air is blown, where the solenoid valve 23 of the flow passage for low-pressure blowing is closed, the solenoid valve 23 of the flow passage for high-pressure blowing is opened, and the solenoid valve 23 of the flow passage for discharging air is closed. Though not illustrated, only the solenoid valve 23 of the flow passage for discharging air is opened at the time of discharging air.

In the blow molding, as described above, compressed air is blown in a state in which discharging air to the outside of the blow mold is not performed during the blowing operation from the inflation of the preform b to the lowering of the temperature of the hollow molded body d itself to stabilize the shape of the hollow molded body d.

However, in the blow molding in this case, the cooling efficiency becomes poor. That is, air inside the internal space c of the hollow molded body d formed by inflating the preform b is not discharged to the outside, and the compressed air a heated by receiving heat from the preform b and the hollow molded body d in a heat-insulated state remains. Therefore, the cooling efficiency of the hollow molded body d by the compressed air a is poor.

Therefore, the stretch blow molding in the above-described stretch blow molding apparatus in the conventional injection stretch blow molding machine has included the following stages to inflate a preform in a state without discharging air to the outside of the blow mold and mold a hollow molded body: a shaping stage of blowing compressed air to inflate the preform to form a hollow molded body; and a cooling stage of, in a state of allowing for discharging air to the outside of the blow mold, blowing compressed air in order to lower the temperature by bringing the hollow molded body into direct contact with the blow mold and to cool the hollow molded body from the internal space side by discharging heat by ventilation of the internal space of the hollow molded body to the outside of the blow mold.

Further, in an injection stretch blow molding machine developed in recent years, the time required for preform molding in an injection molding section is shortened, so that the molding cycle of a hollow molded body is shortened. Thus, a mechanism for shortening the time required for the blowing operation in the stretch blow molding section of the injection stretch blow molding machine is provided.

More specifically, the above-described stretch blow molding apparatus is configured such that the pressure of compressed air to be blown in the shaping stage (non-air-discharging state) in which inflation is performed and the pressure of compressed air blown in the cooling stage (state of discharging air to the outside of the blow mold) are different from each other. In order to make the pressure of the compressed air different between the shaping stage and the cooling stage, the blowing apparatus is configured as follows.

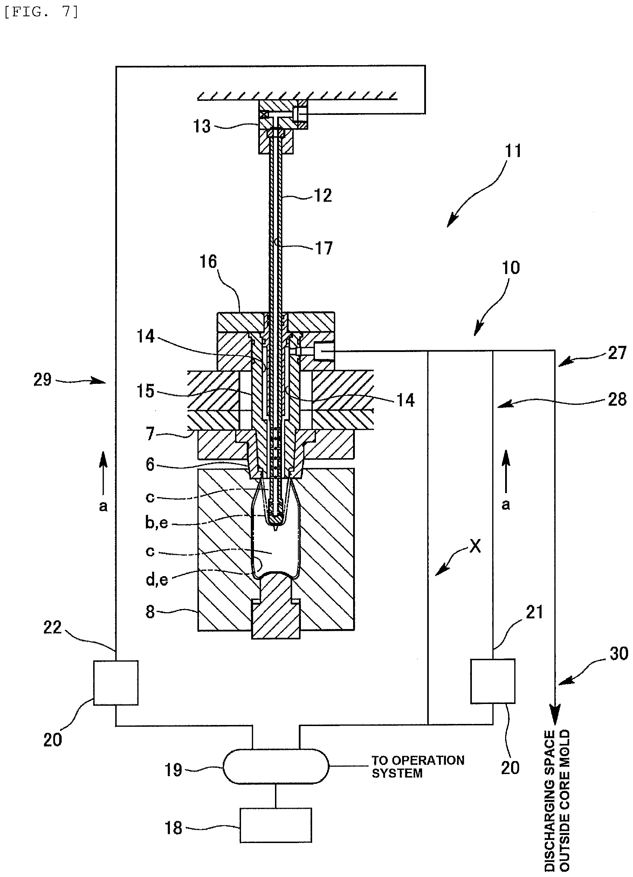

As in the case of the blowing apparatus 10 described above, the blowing apparatus 10 is also configured to include a cylindrical blow core 15 having an in-core passage 14 through which compressed air a flows and through which the rod 12 passes such that the cylindrical blow core 15 is supported by a blow core mounting body 16 to be capable of ascending and descending by raising and lowering the blow core mounting body 16. See FIG. 7.

An in-rod passage 17 is formed also inside the rod 12. The descending of the rod mounting body 13 causes the rod 12 to enter the interior of the preform so that the in-rod passage 17 communicates with the internal space c of the preform b via the portion of the through hole 26.

By lowering the blow core 15 to fit the lower portion of the blow core 15 inside the lip mold 6, a portion of the in-core passage 14 of the blow core 15 is brought into communication with the internal space c of the preform b in the blow mold 8, and compressed air a is blown through the in-core passage 14 into the inside of the preform b that is to be stretched by the rod 12 descending in the in-core passage 14, thereby inflating the preform b with the compressed air a. Furthermore, the compressed air a is blown through the in-rod passage 17 of the rod 12 to perform a blowing operation to obtain the hollow molded body d.

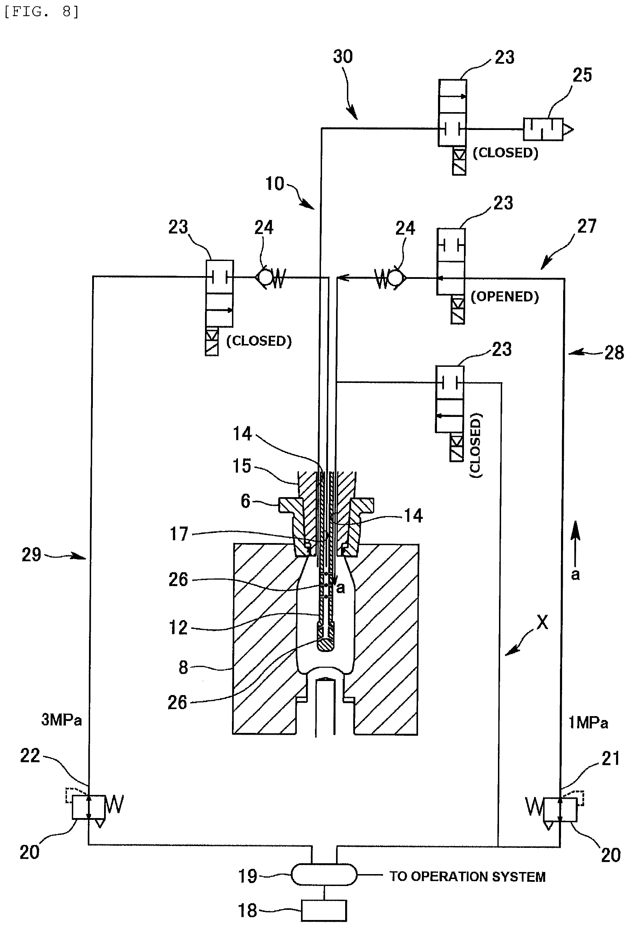

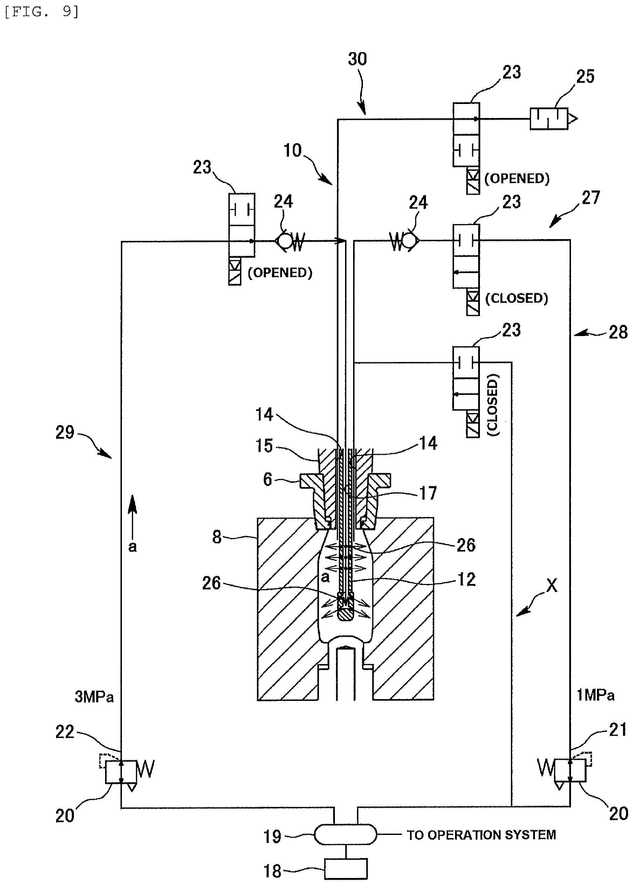

As illustrated in FIGS. 8 and 9, the flow passage of the blowing apparatus 10 is formed by adding a new pipeline for passing compressed air to the flow passage in the above-described blowing apparatus 10 illustrated in FIGS. 4 to 6. In the blowing apparatus 10, first and second compressed air supply sources 21 and 22 are connected so as to take out compressed air from the above-described air tank 19. The blowing apparatus 10 is configured such that a compressed air passage 27 is formed in which compressed air a enters the interior of the preform through the in-core passage 14 and the in-rod passage 17, and the compressed air a flows out from the interior of the preform through the in-core passage 14 to the discharging space outside the blow mold and is discharged.

As a matter of course, the compressed air passage 27 itself, which allows compressed air to enter the preform and to enter the hollow molded body before being discharged (ventilation of the internal space of the hollow molded body), is formed by allowing the blow core 15 to enter the lip mold 6 and placing the rod 12 inside the preform through the blow core 15.

The flow passage in the blowing apparatus 10 illustrated in FIGS. 7 to 9 is shown in a form in which the flow passage X for the high-pressure blowing of the blowing apparatus 10 for blowing without discharging air illustrated in FIGS. 4 to 6 is left as described above. The blowing apparatus 10 illustrated in FIGS. 7 to 9 includes a flow passage configuration that enables high-pressure blowing without discharging air and without passing compressed air to the newly added flow passage portion. The following description is of the use mode in which compressed air is not allowed to pass through the flow passage X for performing high-pressure blowing without discharging air.

As illustrated in the drawings, the compressed air flow passage 27 includes a first inflow passage 28 which is connected to the first compressed air supply source 21 and through which compressed air flows from the first compressed air supply source 21 through the in-core channel 14 to the internal space c of the object to be shaped e in the form of a preform b which can be shaped at high temperature and which is disposed in the blow mold 8.

Further provided is a second inflow passage 29 which is connected to the second compressed air supply source 22. The second inflow passage 29 allows compressed air to flow through the in-rod passage 17 through which compressed air a flows from the second compressed air supply source 22 into the internal space c of the object to be shaped e, which is disposed in the blow mold 8 and is formed into a hollow molded body d by shaping, and through a plurality of the above-described through holes 26 which are opened so that the in-rod passage 17 is brought into communication with the internal space c of the object to be shaped e (in a state in which the preform has been formed into a hollow molded body).

Further provided is an outflow passage 30 through which the compressed air a flows from the internal space c of the object to be shaped e through the in-core passage 14 to the discharging space outside the blow mold. The outflow passage 30 itself is the same as the flow passage for discharging air to the outside of the core mold in the above-described blowing apparatus of the type in which blowing is performed without discharging air illustrated in FIGS. 4 to 6.

### First compressed air supply source, FIGS. 7 to 9

The first compressed air supply source 21 in the blowing apparatus 10 that discharges the air to the outside of the blowing mold during cooling blows compressed air having an air pressure that allows for inflating the object to be shaped e, which is in the form of a preform that is disposed in the blow mold 8 and can be shaped at a high temperature, and for bringing it into contact with the mold inner surface of the blow mold 8 (hollow molded body shape-forming surface) for shaping. Even when the above-described outflow passage 30 is in a non-closed state (opening of the outflow passage), an internal pressure at which the preform inflates to properly shape the hollow molded body is given. The air pressure of the compressed air a for shaping is 1 MPa, for example.

### Second compressed air supply source, FIGS. 7 to 9:

The second compressed air supply source 22 in the blowing apparatus 10 that discharges the air to the outside of the blowing mold during cooling blows compressed air having an air pressure that allows for ventilating the internal space c of the object to be shaped e (hollow molded body) in a large amount of air to the outside of the blow mold, thereby efficiently cooling the object to be shaped e, which is the hollow molded body d, from the internal space c side. Then, as will be described later, when the outflow passage 30 side is in a non-closed state, the internal pressure at which the object to be shaped e is properly cooled is given. The air pressure of the compressed air for cooling is 3 MPa, for example.

### First inflow passage:

A solenoid valve 23 is interposed in the first inflow passage 28, so that the solenoid valve 23 is opened in the process of the shaping stage such that compressed air (1 MPa) from the first compressed air supply source 21 is blown into the internal space c of the object to be shaped e (in the form of preform).

### Second inflow passage:

A pressure reducing valve 20, a solenoid valve 23, and a check valve 24 are interposed in the second inflow passage 29 from the upstream side of the flow of the compressed air, so that the solenoid valve 23 is opened in the process of the above-described cooling stage such that the compressed air (3 MPa) from the second compressed air supply source 22 is blown into the internal space c of the object to be shaped e which has been shaped into a hollow molded body.

### Outflow passage:

As described above, the outflow passage 30 is a flow passage for discharging the compressed air a that has entered the object to be shaped e (hollow molded body) to the outside of the blow mold, and the solenoid valve 23 is interposed therein. The solenoid valve 23 is closed in the process of the above-described shaping stage, and is opened in the process of the cooling stage.

As a result, in the blowing apparatus 10 in the shaping stage, the compressed air a having the air pressure of 1 MPa is blown from the first compressed air supply source 21 through the first inflow passage 28, and the preform is inflated (shaped into a hollow molded body) in a state in which the outflow passage 30 is closed. See FIG. 8.

In the cooling stage, the first inflow passage 28 is closed and the second inflow passage 29 is opened, and the outflow passage 30 is also opened. As a result, compressed air a having an air pressure of 3 MPa higher than the air pressure in the shaping stage is blown from the second compressed air supply source 22 through the second inflow passage 29, and ventilation is performed so that the compressed air a is discharged through the internal space c of the object to be shaped e (hollow molded body) and the outflow passage 30 to the discharging space outside the blow mold. In this manner, cooling is achieved from the internal space side. See FIG. 9.

A silencer 25 is connected to the end of the above-described outflow passage 30 in the same manner as that for the flow passage on the discharging side of the blowing apparatus 10 in the above-described non-air-discharging blow type. The compressed air a in the cooling stage flows out through the silencer 25 into the discharging space.

In FIGS. 8 and 9, the flow directions of the compressed air are indicated by arrows. In order to make the directions of the flow of the compressed air easy to see, an object to be shaped, which is a preform or a hollow molded body, is not shown. In addition, the drawings illustrate the air tank 19 with a connection point of a pipe line for an operation system using compressed air for operations such as opening and closing of a core mold, raising and lowering of a blow core, raising and lowering of a rod, and the like.

However, in the above-described blowing apparatus that discharges air to the outside of the blow mold at the time of cooling, the pipeline from the first compressed air supply source for the shaping stage and the pipeline from the second compressed air supply source for the cooling stage are separately provided, so that the respective pipelines for two systems are incorporated in the injection stretch blow molding machine. Thus, there is a problem that the overall structure of the injection stretch blow molding machine becomes complicated.

The compression machine for storing compressed air in the air tank is a device capable of generating compressed air having an air pressure of 3 MPa for use in the cooling stage. Compression machines such as a compressor for generating high-pressure compressed air have a problem that they are large in size and consume a large amount of power.

In manufacturing the hollow molded body in the above-described injection stretch blow molding machine, the inventor has attempted to mold a hollow molded body by performing the blowing operation in which compressed air having the same air pressure as the above-described air pressure in the shaping stage is blown while the outflow passage of the above-described blowing apparatus was opened in the entire blowing process including the shaping stage and the cooling stage.

Then, the inventor has compared the blow-molded hollow molded body that was blown through the above-described shaping stage and the above-described cooling stage (discharging air to the outside of the core mold), and the blow-molded hollow molded body that was blown while the outflow passage was opened throughout the entire blowing process of the above-mentioned blowing operation and cooling was also performed while performing shaping by blowing compressed air. As a result, it has been found that both hollow molded bodies are equivalent to each other, and an appropriate hollow molded body can be obtained even when shaping and cooling are performed simultaneously throughout the entire blowing process.

In view of the above circumstances, problems to be solved are to perform blow molding in which, when manufacturing a hollow molded body with an injection stretch blow molding machine in which the molding cycle is tried to be shortened, shaping and cooling are < method according to independent claim 1 and a stretch blow molding apparatus according to claim 2 which is adpated to perfom the method of claim 1. > simultaneously performed by blowing compressed air from a single compressed air supply source while discharging compressed air from an end of a flow passage without distinguishing between blowing compressed air for the preform shaping stage and blowing compressed air for cooling from the internal space side of the hollow molded body, thereby performing blow molding, and it is an object of the present invention to achieve energy saving for manufacturing a hollow molded body.

### Solution to Problem

### Invention of claim 1:

The present invention has been made in view of the above-described problems, and provides a stretch blow molding method according to independent claim 1 and a strech blow molding apparatus according to claim 2 which is adapted to perform the method of claim 1.

### Advantageous Effects of Invention

According to the present invention, in the entire process of the blowing operation by the blowing apparatus in the stretch blow molding apparatus, the compressed air flow passage is formed through which compressed air from the compressed air supply source flows through the inflow passage and the internal space of the object to be shaped and further from the outflow passage into the discharging space. Furthermore, under a state in which compressed air from the compressed air flow passage flows out to the discharging space outside the blowing mold throughout the entire process of the blowing operation, the compressed air adjusted to have an air pressure at which the object to be shaped in the form of a preform is inflated to be shaped into the hollow molded body is blown, so that shaping and cooling are simultaneously performed on the object to be shaped.

In the manufacture of a hollow molded body using a conventional injection stretch blow molding machine, in order to be able to take out high-pressure compressed air from an air tank as a second compressed air supply source for the cooling stage, a large-sized compressor or the like for generating high-pressure compressed air has been required. In the present invention, as described above, throughout the entire process of the blowing operation, compressed air adjusted to have an air pressure at which the object to be shaped in the form of a preform is inflated to be shaped into the hollow molded body is blown under the condition that the compressed air flows out from the compressed air flow passage to the discharging space outside the blowing mold. Therefore, the hollow molded body can be manufactured by using a facility configured to generate compressed air for low pressure corresponding to that for the conventional shaping stage, and an excellent effect that energy saving can be easily performed for manufacturing the hollow molded body can be obtained.

### Brief Description of Drawings

FIG. 1 is an explanatory diagram showing an injection stretch blow molding machine.
FIG. 2 is an explanatory diagram schematically showing the arrangement of an injection molding section, a stretch blow molding section, and a takeout section.
FIG. 3 is an explanatory diagram showing an example of a conventional stretch blow molding apparatus.
FIG. 4 is an explanatory diagram schematically showing a main part of a conventional stretch blow molding apparatus of a non-air-discharging type during blowing.
FIG. 5 is an explanatory diagram schematically showing the flow of compressed air during low-pressure blowing by the conventional stretch blow molding apparatus of a non-air-discharging type during blowing.
FIG. 6 is an explanatory diagram schematically showing the flow of compressed air during high-pressure blowing by the conventional stretch blow molding apparatus of a non-air-discharging type during blowing.
FIG. 7 is an explanatory diagram schematically showing a main part of a conventional stretch blow molding apparatus of an air-discharging type outside a core mold during cooling.
FIG. 8 is an explanatory diagram schematically showing the flow of compressed air in a shaping stage of the conventional stretch blow molding apparatus of an air-discharging type outside a core mold during cooling.
FIG. 9 is an explanatory diagram schematically showing the flow of compressed air in a cooling stage of the conventional stretch blow molding apparatus of an air-discharging type outside a core mold during cooling.
FIG. 10 is an explanatory diagram schematically showing an example of a stretch blow molding apparatus according to the present invention when viewed from the front side of the stretch blow molding section.
FIG. 11 is an explanatory diagram schematically showing a main part of the stretch blow molding apparatus according to the present invention.
FIG. 12 is an explanatory diagram schematically showing the flow of compressed air in a stretch blow molding method according to the present invention.
FIG. 13 is an explanatory diagram schematically showing another exemplary flow of compressed air in the stretch blow molding method according to the present invention.

### Description of Embodiments

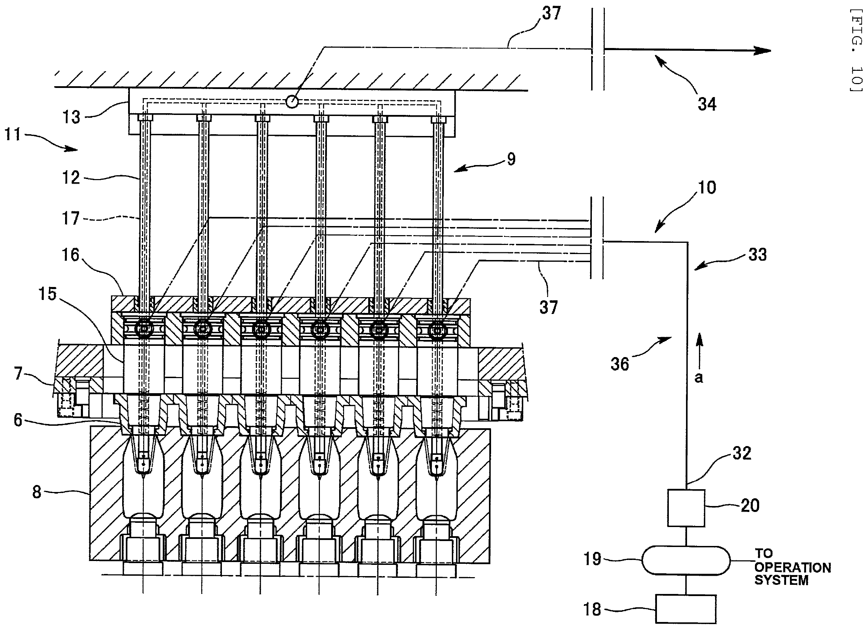

The present invention will next be described in detail on the basis of an embodiment illustrated in FIGS. 10 to 13. Note that the portions having the same configurations as those of the conventional example illustrated in FIGS. 1 to 9 will be denoted by the same reference numerals, and descriptions thereof will be omitted. A stretch blow molding apparatus 11 of the present invention is an apparatus configured in the stretch blow molding section 4 of an injection stretch blow molding machine 1 as described above, and includes a blow mold 8, a stretching apparatus 9, and a blowing apparatus 10.

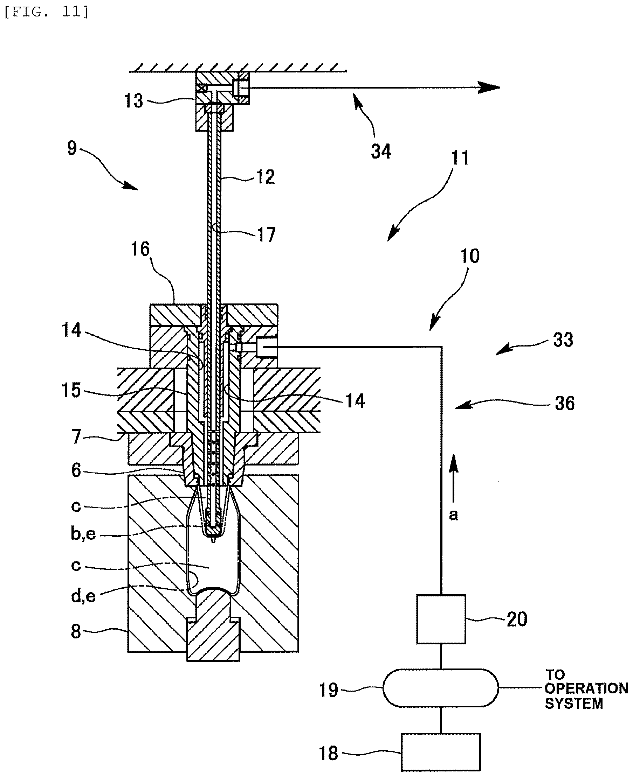

Then, the stretch blow molding apparatus 11 is configured such that the stretching apparatus 9 performs a stretching operation. In the stretching operation, the blow core 15 is fitted into a lip mold 6 positioned corresponding to the blow mold 8, and a rod 12 is moved downward (downward in the rod axial direction) so as to pass through an in-core passage 14 of the blow core 15, and enter an object to be shaped e (in the form of a preform that can be shaped at a high temperature), which is disposed inside the blow mold 8 while being supported by the lip mold 6, inward, so that the object to be shaped e is stretched in the rod axial direction. See FIGS. 10 and 11.

Further, the stretch blow molding apparatus 11 is configured such that the blowing apparatus 10 performs a blowing operation. Here, the blowing operation includes shaping by which the object to be shaped which is to be stretched by the rod 12 in the above-described stretching operation is inflated to be shaped into a hollow molded body, and cooling by ventilating an internal space of the object to be shaped (cooling by evacuating blown compressed air) . Unlike the conventional example described above, the present invention is provided with the stretch blow molding apparatus 11 to perform shaping and cooling simultaneously.

### Blowing apparatus:

The blowing apparatus 10 of the stretch blow molding apparatus 11 of the present invention includes a compressed air supply source 32 configured to take out compressed air from an air tank 19, an inflow passage 33, and an outflow passage 34.

### Compressed air supply source:

The above-described compressed air supply source 32 sends out compressed air adjusted to have an air pressure at which an object to be shaped e in the form of a preform that can be shaped at a high temperature is inflated to be shaped into the form of a hollow molded body d. The compressed air supply source 32 may be any source as long as it sends out the compressed air a that inflates the object to be shaped e into the object to be shaped e in the form of the hollow molded body d. Therefore, as the compression machine 18, it is possible to use a compression machine such as a compressor having the capability of supplying compressed air taken out by the first compressed air supply source 21 in the conventional example into the air tank. The air pressure of the compressed air a sent out from the compressed air supply source 32 is 1 MPa.

### Inflow passage:

The above-described inflow passage 33 is a flow passage through which the above-described compressed air a flows from the compressed air supply source 32 to the internal space c of the object to be shaped e in the blow mold 8. Specifically, an air supply pipe (not shown) having one end connected to the compressed air supply source 32 is connected to a portion of the blow core mounting body 16 which communicates with the above-described in-core passage 14, so that the compressed air a adjusted to have an air pressure of 1 MPa from the compressed air supply source 32 is allowed to pass through the air supply pipe and the in-core passage 14. The inflow passage 33 is a flow passage through which the compressed air a can be blown into the object to be shaped e when the lower end of the blow core 15 fits into the lip mold 6 and the rod 12 of the stretching apparatus 9 enters the inside of the object to be shaped e to allow for blow molding.

As illustrated in FIG. 10, the portion of the air supply pipe for introducing the compressed air a into the in-core passage 14 is branched so as to correspond to the blow core, and each of the air supply pipes is constituted by a flexible tube 37 so as to be able to respond to the ascending and descending movement.

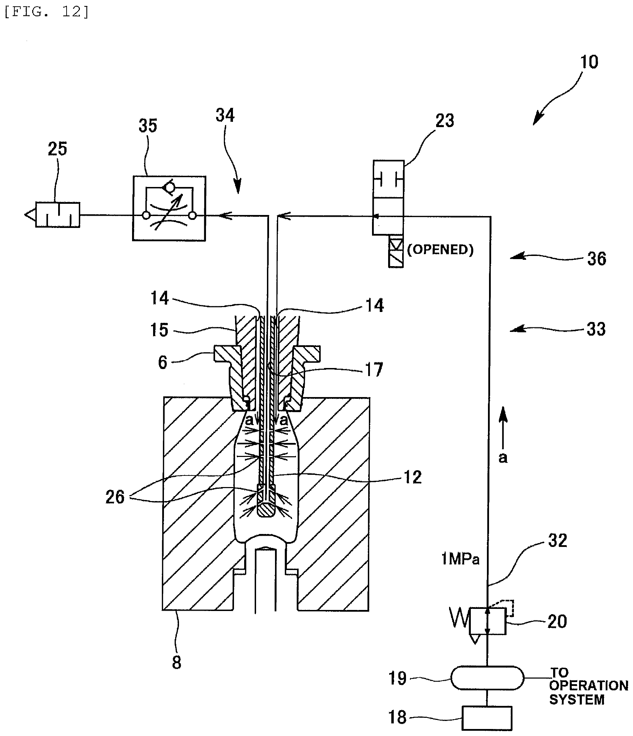

In the above-described inflow passage 33, a solenoid valve 23 is disposed in the middle of the flow passage in a portion serving as the air supply pipe as illustrated in FIG. 12, so that the inflow passage 33 is opened when the blowing apparatus 10 performs the blowing operation.

### Outflow passage:

The above-described outflow passage 34 is a flow passage which serves as a non-closed flow passage through which the compressed air a flows out from the internal space c of the object to be shaped e to the discharging space outside the blow mold. Specifically, an air supply pipe (not shown) is connected to a portion of the rod mounting body 13 which communicates with the above-described in-rod passage 17, so that the above-described compressed air a adjusted to have an air pressure of 1 MPa from the internal space c of the object to be shaped e is allowed to flow out (be discharged) toward the discharge space outside the blow mold. The outflow passage 34 is a flow passage for discharging the compressed air a throughout the entire blowing process when the lower end of the blowing core 15 fits into the lip mold 6 and the rod 12 of the stretching apparatus 9 enters the inside of the object to be shaped e to allow for blow molding.

The portion of the air supply pipe connected to the in-rod passage 17 is also constituted by a flexible tube 37 so that the air supply pipe can respond to the ascending and descending movement.

As illustrated in FIG. 12, a throttle valve 35 is disposed in the above-described outflow passage 34 at a portion serving as the air supply pipe, and a silencer 25 is disposed at the end portion thereof. Thus, the outflow passage 34 is a flow passage that is always open regardless of whether the blowing apparatus 10 is blowing or stopping.

### Compressed air flow passage:

In the blowing apparatus 10 with such a configuration, the compressed air flow passage 36 is formed in which the compressed air a from the compressed air supply source 32 flows through the inflow passage 33 and the internal space c of the object to be shaped e (the object to be shaped from the state in which the object is in the form of a preform to the state in which the object is in the form of a hollow molded body) and through the outflow passage 34 to the discharging space in the entire process of the blowing operation.

In the compressed air flow passage 36 as illustrated in FIG. 12, compressed air adjusted to have an air pressure of 1 MPa at which the object to be shaped e is inflated to be shaped into the form of a hollow molded body is caused to pass throughout the entire process of the blowing operation. At the same time, the compressed air a is caused to be discharged from the outflow passage 34 downstream in the supplying direction of the compressed air a. Therefore, the compressed air flow passage 36 is provided so that the stretch blow molding apparatus 11 is configured to blow the compressed air a into the object to be shaped e, so that shaping of inflating the object to be shaped e into the shape of the hollow molded body and cooling by ventilating the internal space c of the object to be shaped e are simultaneously achieved throughout the entire process of the blowing operation.

By disposing the throttle valve 35 in the outflow passage 34 as described above, it is ensured that a pressure is generated for molding the object to be shaped in the form of a preform that can be shaped at a high temperature into the object to be shaped in the form of a hollow molded body.

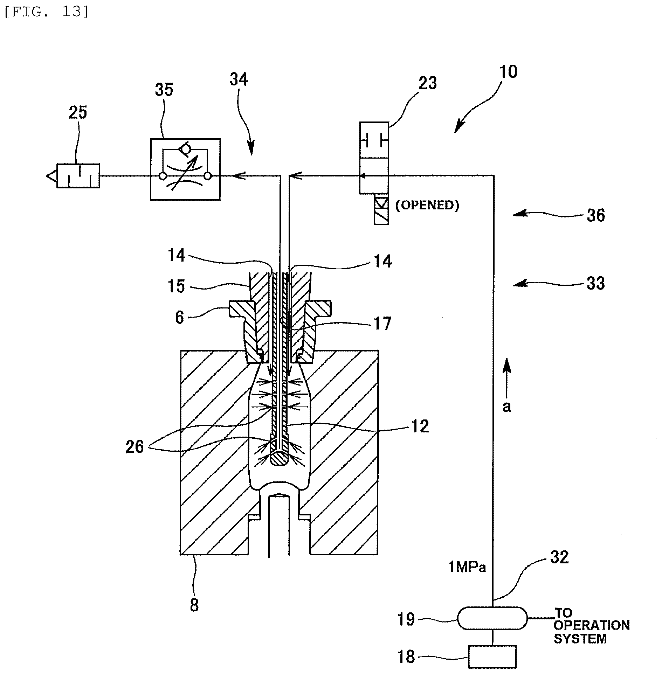

In the inflow passage 33 of the above-described example illustrated in FIGS. 11 and 12, the compressed air supply source 32 is configured as a portion from which the compressed air regulated in pressure by the pressure reducing valve 20 can be taken out. As a matter of course, in the case where a desired air pressure can be taken out from the air tank 19, the compressed air supply source 32 may be a portion configured to take out the compressed air a directly from the air tank 19 as illustrated in FIG. 13.

As the means for supplying the compressed air a having the air pressure of 1 MPa from the compressed air supply source 32 and for reliably obtaining a pressure for performing shaping to obtain the form of the hollow molded body while ventilating the internal space of the object to be shaped e under the condition that the outflow passage 34 is opened, it is not limited to the use of the throttle valve 35.

In addition, in order to inflate the object to be shaped e in the form of the preform b into the object to be shaped e in the form of the hollow molded body d, the air pressure of the compressed air a taken out from the compressed air supply source 32 is 1 MPa in the above-described example. However, the air pressure of the compressed air is not limited to 1 MPa as long as the object to be shaped in the form of the hollow molded body can be obtained by inflating the object to be shaped in the form of the preform b. For example, the compressed air sent out from the compressed air supply source 32 may have an air pressure selected from the range of 0.1 MPa to 3.5 MPa.

### Comparison of molded articles:

A hollow molded body was manufactured by incorporating a conventional stretch blow molding apparatus into an injection stretch blow molding machine. Further, a hollow molded body was manufactured by incorporating the stretch blow molding apparatus as an example into an injection stretch blow molding machine, and implementing the above-described invention. The manufactured hollow molded bodies by both machines were compared with each other.

The blowing operation of each of the conventional stretch blow molding apparatus and the stretch blow molding apparatus implementing the present invention was as follows. The hollow molded body was a milk bottle made of PET (for a content of 250 mL) .

### Conventional stretch blow molding apparatus for comparison:

As the blowing operation, shaping (in a non-air-discharging state) was performed in 1.9 seconds by supplying compressed air having the air pressure of 1 MPa, and then, cooling by ventilation (air-discharging) was performed in 2.3 seconds by supplying compressed air having the air pressure of 3 MPa. The molding cycle with the injection stretch blow molding machine was 9.94 seconds.

### Exemplary stretch blow molding apparatus for comparison:

As the blowing operation, compressed air having the air pressure of 1 MPa was supplied such that air was constantly discharged from the end portion of the above-described compressed air flow passage (from the silencer portion), and the above-described shaping and the above-described cooling were simultaneously performed in 4.2 seconds, thereby obtaining a hollow molded body. The molding cycle with the injection stretch blow molding machine was 9.96 seconds.

Comparison of the hollow molded body manufactured by incorporating the above-described conventional stretch blow molding apparatus with the hollow molded body manufactured by incorporating the stretch blow molding apparatus of the example and implementing the above-described invention showed that both hollow molded bodies had the same molding dimensions and that both hollow molded bodies were molded well.

### Comparison regarding flow rate of compressed air:

When the flow rate of air by blowing the compressed air having the air pressure of 3 MPa performed by the blow molding is compared with the flow rate of air by blowing the compressed air having the air pressure of 1 MPa,
the maximum flow rate for blowing the compressed air having the air pressure of 3 MPa was about 10,000 L/min,
the maximum flow rate for blowing the compressed air having the air pressure of 1 MPa was about 2,000 L/min, and
the maximum flow rate at the air pressure of 1 MPa was about 1/5 of the maximum flow rate at the air pressure of 3 MPa.

The minimum flow rate for blowing the compressed air having the air pressure of 3 MPa was about 4,000 L/min,
the minimum flow rate for blowing the compressed air having the air pressure of 1 MPa was about 1,000 L/min, and
the minimum flow rate at the air pressure of 1 MPa was about 1/4 of the minimum flow rate at the air pressure of 3 MPa.

Comparison of the maximum flow rate at the air pressure of 3 MPa with the minimum flow rate at the air pressure of 1 MPa showed that the minimum flow rate at the air pressure of 1 MPa was about 1/10 of the maximum flow rate at the air pressure of 3 MPa. Since the flow rate in the case of the air pressure of 1 MPa is overwhelmingly small as described above, it is understood that the amount of air used is smaller in the case where the hollow molded body is molded by implementing the present invention when a case of incorporating the conventional stretch blow molding apparatus into the injection stretch blow molding machine to manufacture the hollow molded body and a case of incorporating the stretch blow molding apparatus as the example and implementing the above-mentioned invention to manufacture the hollow molded body are compared with each other.

### Clamping unit in stretch blow molding apparatus:

In the example of the present embodiment in which the compressed air having the air pressure of 1 MPa is blown to simultaneously perform the shaping and the cooling, the compressed air flows out from the compressed air flow passage into the discharging space even when the preform is transformed into the shape of the hollow molded body. The pressure by which the blow mold is caused to be opened at this time is smaller than the pressure by which the blow mold is caused to be opened at the time of shaping by a conventional non-air-discharging method.

In particular, in the conventional example, the compressed air having the air pressure of 1 MPa is blown when shaping is performed without discharging air, and the pressure for blowing that causes the blow mold to open at this time is low. However, in the case of the present example, even if compressed air having the same air pressure is blown, the pressure that causes the blow mold to open is further small. Therefore, as the mold clamping unit in the stretch blow molding apparatus, one adopting a smaller mold clamping force can be employed.

Further, in the case of a blow mold having a bottom mold, not only can the above-described mold clamping force be reduced, but a pressure circuit of applying a smaller pressure can be adopted for the pressure of pushing up the bottom mold. In addition, the force given against the pressure that pushes the blow core upward during the blowing process can be reduced. As described, it can be understood that the mold clamping force, the bottom mold pushing-up force, and the blow core pushing-down force can be reduced in this manner.

Further, since the mold clamping force, the bottom mold pushing-up force, the blow core pushing-down force, and the like applied to the blow mold can be reduced, the mold strength of the blow mold can also be reduced.

In addition, it can be understood that a control electric circuit for opening and closing the first inflow passage and the second inflow passage in the above-described conventional apparatus is not necessary, and thus the number of elements that may be damaged can be reduced. Further, in the present embodiment, the configuration is simplified, and the number of parts of the valves for controlling the flow of the compressed air can be greatly reduced.

### Reference Signs List

- 1: Injection stretch blow molding machine
- 4: Stretch blow molding section
- 6: Lip mold
- 8: Blow mold
- 9: Stretching apparatus
- 10: Blowing apparatus
- 11: Stretch blow molding apparatus
- 12: Rod
- 14: In-core passage
- 15: Blow core
- 17: In-rod passage
- 32: Compressed air supply source
- 33: Inflow passage
- 34: Outflow passage
- 35: Throttle valve
- 36: Compressed air passage
- a: Compressed air
- b: Preform
- c: Internal space
- d: Hollow molded body
- e: Object to be shaped

## Claims

1. A stretch blow molding method comprising producing, from an object to be shaped (e) being in a form of a preform (b), an object to be shaped (e) in a form of a hollow molded body (d) by a stretch blow molding apparatus (11),
the stretch blow molding apparatus (11) including:
a blow mold (8) in which an object to be shaped (e), which is in a form of a preform (b) that can be shaped at a high temperature, can be disposed and which has a hollow molded body shape-forming surface on an inner surface thereof,
a stretching apparatus configured to cause a rod (12) to enter the object to be shaped (e), which is disposed in the blow mold (8) and is in the form of the preform (b), inward, and a blowing apparatus (10) configured to blow compressed air (a) inward of the object to be shaped (e) being in the form of the preform (b), wherein:
the stretch blow molding apparatus (11) performs
a stretching operation of stretching the object to be shaped (e) being in the form of the preform (b) in a rod axial direction by causing the rod (12) to enter the object, and
a blowing operation including shaping by which the object to be shaped (e) that is stretched by the rod (12) is inflated to shape the object to be shaped (e) into the hollow molded body (d) and cooling by ventilating an internal space (c) of the object to be shaped (e);
the blowing apparatus (10) includes a compressed air supply source (32) configured to send out compressed air (a) adjusted to have an air pressure at which the object to be shaped (e) being in the form of the preform (b) is inflated to be shaped into the hollow molded body (d),
an inflow passage (33) through which the compressed air (a) from the compressed air supply source (32) flows to an internal space (c) of the object to be shaped (e) disposed in the blow mold (8), and a non-closed outflow passage (34) through which the compressed air (a) flows out from the internal space (c) of the object to be shaped (e) to a discharging space outside the blow mold (8);
in an entire process of the blowing operation by the blowing apparatus (10), a compressed air flow passage is formed through which the compressed air (a) from the compressed air supply source (32) flows through the inflow passage (33) and the internal space (c) of the object to be shaped (e) and through the outflow passage (34) into the discharging space; and
**characterized in that**
the shaping of blowing the compressed air (a) is adjusted to have an air pressure, at which the object to be shaped (e) in the form of the preform (b) is inflated to be shaped into the hollow molded body (d), to inflate the object to be shaped (e) in the form of the preform (b) to be shaped into the hollow molded body (d), and
the cooling by ventilating the internal space (c) of the object to be shaped (e) are simultaneously performed throughout the entire process of the blowing operation.

2. A stretch blow molding apparatus (11) adapted to perform the method claim 1, said stretch blow molding apparatus comprising:
a blow mold (8) in which an object to be shaped (e), which is in a form of a preform (b) that can be shaped at a high temperature, can be disposed and which has a hollow molded body shape-forming surface on an inner surface thereof,
a stretching apparatus (9) configured to cause a rod (12) to enter the object to be shaped (e), which is disposed in the blow mold (8) and is in the form of the preform (b), inward, and a blowing apparatus (10) configured to blow compressed air (a) inward of the object to be shaped (e) being in the form of the preform (b), wherein:
the stretch blow molding apparatus (11) is configured to perform
a stretching operation of stretching the object to be shaped (e) being in the form of the preform (b) in a rod axial direction by causing the rod (12) to enter the object, and
a blowing operation including shaping by which the object to be shaped (e) that is stretched by the rod (12) is inflated to shape the object to be shaped (e) into a hollow molded body (d) and cooling by ventilating an internal space (c) of the object to be shaped (e);
the blowing apparatus (10) includes a compressed air supply source (32) configured to send out compressed air (a) adjusted to have an air pressure at which the object to be shaped (e) being in the form of the preform (b) is inflated to be shaped into the hollow molded body (d), an inflow passage (33) through which the compressed air (a) from the compressed air supply source (32) may flow to an internal space (c) of the object to be shaped (e) disposed in the blow mold (8), and a non-closed outflow passage (34) through which the compressed air (a) may flow out from the internal space (c) of the object to be shaped (e) to a discharging space outside the blow mold (8);
wherein the blowing apparatus is configured in such a manner that in an entire process of the blowing operation, a compressed air flow passage is formed through which the compressed air (a) from the compressed air supply source (32) may flow through the inflow passage (33) and the internal space (c) of the object to be shaped (e) and through the outflow passage (34) into the discharging space;
**characterized in that**
the compressed air flow passage is a flow passage in which the shaping of blowing the compressed air (a) is adjusted to have an air pressure, at which the object to be shaped (e) being in the form of the preform (b) may be inflated to be shaped into the hollow molded body (d), to inflate the object to be shaped (e) in the form of the preform (b) to be shaped into the hollow molded body (d) and the cooling by ventilating the internal space (c) of the object to be shaped (e) are simultaneously performed throughout the entire process of the blowing operation.

## Patentansprüche

1. Streckblasformverfahren, umfassend das Herstellen aus einem zu formenden Gegenstand (e), der in Form eines Vorformlings (b) vorliegt, eines zu formenden Gegenstands (e) in Form eines Hohlformkörpers (d) mittels einer Streckblasformvorrichtung (11),
wobei die Streckblasformvorrichtung (11) umfasst:
eine Blasform (8), in der ein zu formender Gegenstand (e), der in Form eines Vorformlings (b) vorliegt, der bei einer hohen Temperatur geformt werden kann, angeordnet werden kann und die an ihrer Innenfläche eine formgebende Hohlformkörperfläche aufweist,
eine Streckvorrichtung, die so konfiguriert ist, dass sie einen Stab (12) veranlasst, in den zu formenden Gegenstand (e), der in der Blasform (8) angeordnet ist und in Form eines Vorformlings (b) vorliegt, eingebracht zu werden, und eine Blasvorrichtung (10), die so konfiguriert ist, dass sie Druckluft (a) in den zu formenden Gegenstand (e), der in Form eines Vorformlings (b) vorliegt, einbläst, wobei:
die Streckblasformvorrichtung (11) Folgendes ausführt:
einen Streckvorgang, bei dem der zu formende Gegenstand (e), der in Form eines Vorformlings (b) vorliegt, in einer axialen Richtung des Stabs gestreckt wird, indem der Stab (12) in den Gegenstand eingebracht wird, und
einen Blasvorgang, der eine Formgebung umfasst, durch die der zu formende Gegenstand (e), der durch den Stab (12) gestreckt wird, aufgeblasen wird, um den zu formenden Gegenstand (e) in den Hohlformkörper (d) zu formen, und eine Kühlung durch Belüftung eines Innenraums (c) des zu formenden Gegenstands (e);
wobei die Blasvorrichtung (10) eine Druckluftzufuhrquelle (32) umfasst, die so konfiguriert ist, dass sie Druckluft (a) ausgibt, die so eingestellt ist, dass sie einen Luftdruck aufweist, bei dem der zu formende Gegenstand (e), der in Form des Vorformlings (b) vorliegt, aufgeblasen wird, um zu dem Hohlformkörper (d) geformt zu werden,
und einen Einströmungskanal (33), durch den die Druckluft (a) von der Druckluftzufuhrquelle (32) zu einem Innenraum (c) des in der Blasform (8) angeordneten zu formenden Gegenstands (e) strömt, und einen nicht geschlossenen Ausströmungskanal (34), durch den die Druckluft (a) aus dem Innenraum (c) des zu formenden Gegenstands (e) zu einem Austragsraum außerhalb der Blasform (8) ausströmt;
wobei in einem Gesamtprozess des Blasvorgangs durch die Blasvorrichtung (10) ein Druckluftströmungskanal gebildet wird, durch den die Druckluft (a) von der Druckluftzufuhrquelle (32) durch den Einströmungskanal (33) und den Innenraum (c) des zu formenden Gegenstands (e) und durch den Ausströmungskanal (34) in den Austragsraum strömt; und
**dadurch gekennzeichnet, dass**
die Formgebung durch Einblasen der Druckluft (a) auf einen Luftdruck eingestellt ist, bei dem der zu formende Gegenstand (e) in Form des Vorformlings (b) aufgeblasen wird, um in den Hohlformkörper (d) geformt zu werden, um den zu formenden Gegenstand (e) in Form des Vorformlings (b) aufzublasen, um zu dem Hohlformkörper (d) geformt zu werden, und
die Kühlung durch Belüftung des Innenraums (c) des zu formenden Gegenstands (e) während des gesamten Blasvorgangs gleichzeitig durchgeführt werden.

2. Streckblasformvorrichtung (11) zum Durchführen des Verfahrens nach Anspruch 1, wobei die Streckblasformvorrichtung umfasst:
eine Blasform (8), in der ein zu formender Gegenstand (e), der in Form eines Vorformlings (b) vorliegt, der bei einer hohen Temperatur geformt werden kann, angeordnet werden kann und die an ihrer Innenfläche eine formgebende Hohlformkörperfläche aufweist,
eine Streckvorrichtung (9), die so konfiguriert ist, dass sie einen Stab (12) veranlasst, in den zu formenden Gegenstand (e), der in der Blasform (8) angeordnet ist und in der Form eines Vorformlings (b) vorliegt, nach innen eingebracht zu werden, und eine Blasvorrichtung (10), die so konfiguriert ist, dass sie Druckluft (a) in das Innere des zu formenden Gegenstands (e), der in der Form des Vorformlings (b) vorliegt, einbläst, wobei
wobei die Streckblasformvorrichtung (11) so konfiguriert ist, dass sie ausführt:
einen Streckvorgang, bei dem der zu formende Gegenstand (e), der in der Form des Vorformlings (b) vorliegt, in einer axialen Richtung des Stabs gestreckt wird, indem der Stab (12) in den Gegenstand eingebracht wird, und
einen Blasvorgang, der eine Formgebung umfasst, durch die der zu formende Gegenstand (e), der durch den Stab (12) gestreckt wird, aufgeblasen wird, um den zu formenden Gegenstand (e) zu einem Hohlformkörper (d) zu formen, und eine Kühlung durch Belüftung eines Innenraums (c) des zu formenden Gegenstands (e);
wobei die Blasvorrichtung (10) eine Druckluftzufuhrquelle (32) umfasst, die so konfiguriert ist, dass sie Druckluft (a) ausgibt, die so eingestellt ist, dass sie einen Luftdruck aufweist,
bei dem der zu formende Gegenstand (e), der in Form des Vorformlings (b) vorliegt, aufgeblasen wird, um zu dem Hohlformkörper (d) geformt zu werden, und einen Einströmungskanal (33), durch den die Druckluft (a) aus der Druckluftzufuhrquelle (32) zu einem in der Blasform (8) angeordneten Innenraum (e) des zu formenden Gegenstands (e) strömen kann, und einen nicht geschlossenen Ausströmungskanal (34), durch den die Druckluft (a) aus dem Innenraum (c) des zu formenden Gegenstands (e) zu einem Austragsraum außerhalb der Blasform (8) ausströmen kann;
wobei die Blasvorrichtung so konfiguriert ist, dass in einem Gesamtprozess des Blasvorgangs ein Druckluftströmungskanal gebildet wird, durch den die Druckluft (a) von der Druckluftzufuhrquelle (32) durch den Einströmungskanal (33) und den Innenraum (c) des zu formenden Gegenstands (e) und durch den Ausströmungskanal (34) in den Austragsraum strömen kann,
**dadurch gekennzeichnet, dass**
der Druckluftströmungskanal ein Strömungskanal ist, in dem die Formgebung durch Einblasen der Druckluft (a) auf einen Luftdruck eingestellt ist, bei dem der zu formende Gegenstand (e) in Form des Vorformlings (b) zur Formgebung in den Hohlformkörper (d) aufgeblasen werden kann, das Aufblasen des zu formenden Gegenstands (e) in Form des Vorformlings (b), der zu dem Hohlformkörper (d) geformt werden soll, und die Kühlung durch Belüftung des Innenraums (c) des zu formenden Gegenstands (e) während des Gesamtprozesses des Blasvorgangs gleichzeitig durchgeführt werden.

## Revendications

1. Procédé de moulage par soufflage avec étirage comprenant la production, à partir d'un objet à façonner (e) étant dans une forme d'une préforme (b), d'un objet à façonner (e) dans une forme d'un corps moulé creux (d) par un appareil de moulage par soufflage avec étirage (11),
l'appareil de moulage par soufflage avec étirage (11) comportant :
un moule de soufflage (8) dans lequel un objet à façonner (e), qui est dans une forme d'une préforme (b) pouvant être façonnée à une haute température, peut être disposé et qui présente une surface de formation de forme de corps moulé creux sur une surface intérieure de celui-ci, un appareil d'étirage configuré pour amener une tige (12) à pénétrer l'objet à façonner (e), qui est disposé dans le moule de soufflage (8) et qui est dans la forme de la préforme (b), vers l'intérieur, et un appareil de soufflage (10) configuré pour souffler de l'air comprimé (a) vers l'intérieur de l'objet à façonner (e) étant dans la forme de la préforme (b), dans lequel :
l'appareil de moulage par soufflage avec étirage (11) réalise
une opération d'étirage consistant à étirer l'objet à façonner (e) étant dans la forme de la préforme (b) dans une direction axiale de tige en amenant la tige (12) à pénétrer l'objet, et
une opération de soufflage comportant le façonnage par lequel l'objet à façonner (e) qui est étiré par la tige (12) est gonflé pour façonner l'objet à façonner (e) dans le corps moulé creux (d) et le refroidissement par la ventilation d'un espace interne (c) de l'objet à façonner (e) ;
l'appareil de soufflage (10) comporte une source d'alimentation en air comprimé (32) configurée pour envoyer de l'air comprimé (a) ajusté pour avoir une pression d'air à laquelle l'objet à façonner (e) étant dans la forme de la préforme (b) est gonflé pour être façonné dans le corps moulé creux (d),
un passage d'écoulement entrant (33) à travers lequel l'air comprimé (a) provenant de la source d'alimentation en air comprimé (32) s'écoule jusqu'à un espace interne (c) de l'objet à façonner (e) disposé dans le moule de soufflage (8), et un passage d'écoulement sortant non fermé (34) à travers lequel l'air comprimé (a) s'écoule depuis l'espace interne (c) de l'objet à façonner (e) jusqu'à un espace de décharge à l'extérieur du moule de soufflage (8) ;
dans un processus complet de l'opération de soufflage par l'appareil de soufflage (10), il est formé un passage d'écoulement d'air comprimé à travers lequel l'air comprimé (a) provenant de la source d'alimentation en air comprimé (32) s'écoule à travers le passage d'écoulement entrant (33) et l'espace interne (c) de l'objet à façonner (e) et à travers le passage d'écoulement sortant (34) dans l'espace de décharge ; et
**caractérisé en ce que**
le façonnage du soufflage de l'air comprimé (a) est ajusté pour avoir une pression d'air à laquelle l'objet à façonner (e) dans la forme de la préforme (b) est gonflé pour être façonné dans le corps moulé creux (d), pour gonfler l'objet à façonner (e) dans la forme de la préforme (b) à façonner dans le corps moulé creux (d), et le refroidissement par la ventilation de l'espace interne (c) de l'objet à façonner (e) sont réalisés simultanément dans le processus complet de l'opération de soufflage.

2. Appareil de moulage par soufflage avec étirage (11) apte à réaliser le procédé selon la revendication 1, ledit appareil de moulage par soufflage avec étirage (11) comprenant :
un moule de soufflage (8) dans lequel un objet à façonner (e), qui est dans une forme d'une préforme (b) pouvant être façonnée à une haute température, peut être disposé et qui présente une surface de formation de forme de corps moulé creux sur une surface intérieure de celui-ci, un appareil d'étirage (9) configuré pour amener une tige (12) à pénétrer l'objet à façonner (e), qui est disposé dans le moule de soufflage (8) et qui est dans la forme de la préforme (b), vers l'intérieur, et un appareil de soufflage (10) configuré pour souffler de l'air comprimé (a) vers l'intérieur de l'objet à façonner (e) étant dans la forme de la préforme (b), dans lequel :
l'appareil de moulage par soufflage avec étirage (11) est configuré pour réaliser
une opération d'étirage consistant à étirer l'objet à façonner (e) étant dans la forme de la préforme (b) dans une direction axiale de tige en amenant la tige (12) à pénétrer l'objet, et
une opération de soufflage comportant le façonnage par lequel l'objet à façonner (e) qui est étiré par la tige (12) est gonflé pour façonner l'objet à façonner (e) dans le corps moulé creux (d) et le refroidissement par la ventilation d'un espace interne (c) de l'objet à façonner (e) ;
l'appareil de soufflage (10) comporte une source d'alimentation en air comprimé (32) configurée pour envoyer de l'air comprimé (a) ajusté pour avoir une pression d'air à laquelle l'objet à façonner (e) étant dans la forme de la préforme (b) est gonflé pour être façonné dans le corps moulé creux (d), un passage d'écoulement entrant (33) à travers lequel l'air comprimé (a) provenant de la source d'alimentation en air comprimé (32) peut s'écouler jusqu'à un espace interne (c) de l'objet à façonner (e) disposé dans le moule de soufflage (8), et un passage d'écoulement sortant non fermé (34) à travers lequel l'air comprimé (a) peut s'écouler depuis l'espace interne (c) de l'objet à façonner (e) jusqu'à un espace de décharge à l'extérieur du moule de soufflage (8) ;
dans lequel l'appareil de soufflage est configuré de telle manière que, dans un processus complet de l'opération de soufflage, il soit formé un passage d'écoulement d'air comprimé à travers lequel l'air comprimé (a) provenant de la source d'alimentation en air comprimé (32) peut s'écouler à travers le passage d'écoulement entrant (33) et l'espace interne (c) de l'objet à façonner (e) et à travers le passage d'écoulement sortant (34) dans l'espace de décharge ;
**caractérisé en ce que** le passage d'écoulement d'air comprimé est un passage d'écoulement dans lequel le façonnage du soufflage de l'air comprimé (a) est ajusté pour avoir une pression d'air, à laquelle l'objet à façonner (e) étant dans la forme de la préforme (b) peut être gonflé pour être façonné dans le corps moulé creux (d), pour gonfler l'objet à façonner (e) dans la forme de la préforme (b) à façonner dans le corps moulé creux (d) et le refroidissement par la ventilation de l'espace interne (c) de l'objet à façonner (e) sont réalisés simultanément dans le processus complet de l'opération de soufflage.
